# EUROPEAN PATENT APPLICATION

(11) **EP 1 298 571 A1**
(43) Date of publication of application: **02.04.2003**
(21) Application number: 00940923.6
(22) Date of filing: 03.07.2000
(51) Int. Cl.: G06F 19/00, G06F 17/30, G06F 13/00, G06K 7/00

(54) **CHARGE SYSTEM FOR USE OF TWO-DIMENSIONAL CODE**

(30) Priority: 08.03.2000 JP 2000064231
(71) Applicant: Wakamoto, Masaki, Osaka-shi, Osaka 536 0022 (JP)
(72) Inventor: Wakamoto, Masaki, Osaka-shi Osaka 536-0022 (JP)
(74) Representative: Ebner von Eschenbach, Jennifer
(86) International application number: JP0004396
(87) International publication number: WO01067367

(57) **Abstract**

A charge system for use of two-dimensional code in electronic commerce where information on advertisement, presentation, and trade of merchandise is transmitted/received through public communication lines, characterized in that according to the number of hits that the user scans image information (two-dimensional codes) added to a medium such as paper or commodity provided by a sender of trade information, authentication of the trade information sender is carried out, and a predetermined charge for the use of the image information (two-dimensional codes) is given to the trade information sender on the basis of the authentication data and the number of hits.

## Description

### BACKGROUND OF THE INVENTION

### 1. Field of the Invention

The present invention relates to the verification of the identity of an originating party furnishing commercial information and certain image information, and to a charge system for the use of image information that charges a fee for the use of the image information based on this verification, for electronic commerce in which information regarding the advertising, presentation or sale of merchandise is sent and received using a public communication line. More specifically, the present invention relates to a system for charging a party originating commercial information a certain fee, based on the number of times that an information consumer has scanned with a scanning device image information, such as a two-dimensional code, which is attached to a medium such as a piece of paper, merchandise, or a printed document furnished by the party originating the commercial information, in electronic commerce using a public communication line such as the internet or personal computer communication.

### 2. Description of the Related Art

With computer networks becoming ever more popular, electronic commerce using public communication lines, such as the trading of merchandise, services or information by personal computer communication or over the internet, is rapidly becoming more popular, too. In this development, a problem for the originator of information is how to reliably and efficiently furnish information to a consumer. On the other hand, a problem of the receiving end (the consumer) is how to easily access the desired information.

Other serious problems are a method for reliably confirming the identity of the parties involved in a transaction of merchandise, services or information, that is, the party originating information, and a method for properly charging a fee to a user or consumer.

To solve these problems, many techniques have been developed and announced with regard to, for example, methods for accessing web pages, such as a method in which in a simple operation an internet URL is easily entered into the web page address field of a browser, URL input systems using image information such as a barcode or a two-dimensional code, receivers reading in image information in form of a barcode or a two-dimensional code into which mail addresses used for personal computer communication or the internet have been converted, and authentication systems for verifying the identity of someone.

Examples for some typical techniques that have been published include a system printing two-dimensional codes onto printed documents and transmitting information off-line (JP H8-329207A), a method for converting a mail address used in personal computer communications or the internet into a barcode and inputting that barcode (JP H10-143596A), a system for inputting the barcode of the URL of an internet resource (JP H10-177613A), a billing system using bills on which a two-dimensional code is printed (JP H11-53453A), and use of a two-dimensional code reader for various types of information in two-dimensional codes (JP H11-120311A) and many other methods and devices.

Also, an information processing device and method for reading with a read-in device a character string or a graphics pattern representing the access address of a server or a web page or other information to access that information (JP H9-204389A), an internet connection system using a mosaic pattern (JP H10-105492A), and a world wide web file viewing system using barcodes (JP H10-171758A) have been proposed.

Furthermore, a system and method for accessing world wide web pages easier than before by using a digital code, such as a two-dimensional barcode, and a scanner, and a system and method that makes multiple communication over the internet or a telephone line with the same user interface easier than before by representing individual identification information in unified form using a digital code, such as a two-dimensional barcode have been proposed (JP H10-254802A).

Furthermore, conventionally, banner advertising is used as a means for advertising and publicity on internet web pages. The charge system that is usually employed to charge a fee for use of banners is to charge a banner fee based on the number of hits of the banner on a search site, or to charge a constant fee depending on the exposure of the banner on the page as a fee for banners that are placed on a top page. However, in the case of banner advertising, unless the banner itself is actually hit, their purpose intended by the party originating the information is not attained.

Thus, the use of banner advertising on internet web pages tends to increase, but there are limits to the current use of banner advertisements on world wide web page screens, and there is a strong demand for the development of a new information originating system that can accommodate a greater advertising effect.

The browsing of web pages with a world wide web browser and the calling of e-mail forms can be accomplished by very simple operations, that is, simply by connecting a computer to the internet and performing a certain instruction. However, it is definitely not easy to pinpoint necessary information.

The inventors have focused on this aspect and developed methods for converting internet web addresses and e-mail addresses into a two-dimensional code for display and have already completed several patent applications thereon (Japanese Patent Applications H10-255226A to 255228A, H10-377253A and 377254A, H11-72823A, H11-140270A, among others).

However, the present situation is that there is no method with which a party furnishing two-dimensional codes can manage two-dimensional codes and their users, and bill for them. That is to say, according to conventional thinking, a fee system is set up separately from the party producing the two-dimensional code (the user), and fees are set low for someone using many two-dimensional codes, whereas a premium is charged to one-time users, and it has been assumed that individual fee schedules can be set up for different users, but this has failed to contribute to the promotion of the use of two-dimensional codes, and there was also the problem that user contracts and management are complicated.

### DISCLOSURE OF THE INVENTION

In this situation and with regard to the related art, the inventors have done thorough research, in electronic commerce in which information regarding the advertising, presentation or sale of merchandise is sent and received using a public communication line, with the object of to develop a new information originating system for information furnished by an originating party and for which a high frequency of use can be expected. The result of this research was the development of a new charge system for charging a usage fee, wherein an originating party originates electronic information, attaches certain image information, such as a two-dimensional code, into which necessary information and authentication data has been entered onto a medium, such as piece of paper or merchandise, and furnishes the medium to a consumer, to verify the originating party, the consumer confirms the identity of the party originating the commercial information when accessing the commercial information by specifying the originating party based on the scanned authentication data of the image information, such as the two-dimensional code, on the medium, and based on the authentication data and the number of hits of the image information, such as the two-dimensional code, the party originating the commercial information is charged for the use of the image information.

That is to say, it is an object of the present invention to provide, in electronic commerce in which information regarding the advertising, presentation or sale of merchandise is sent and received using a public communication line, a system for charging a certain fee to a party originating commercial information, based on the number of times that a consumer has scanned with a scanning device the image information, such as the two-dimensional code, that the party originating the commercial information has attached to a medium, such as a piece of paper or merchandise.

In order to solve the above problems, the present invention is constituted by the following technical means.
(1) A charge system for charging for the use of image information in electronic commerce involving sending and receiving information regarding advertising, presentation or sale of merchandise over a public communication line, the system charging a certain fee to a party originating commercial information, based on the number of times that a consumer of the information has scanned with a scanning device image information attached to a medium, such as a piece of paper or merchandise, which has been furnished by the party originating the commercial information, wherein:
   the originating party originates commercial information, attaches certain image information into which necessary information and authentication data has been entered onto a medium and furnishes the medium to a consumer;
   to verify the originating party, the consumer confirms the identity of the party originating the commercial information when accessing the commercial information by specifying the originating party based on the scanned authentication data of the image information on the medium; and
   based on the authentication data and its number of hits, the party originating the commercial information is charged for the use of the image information.
(2) The charge system for charging for the use of image information in electronic commerce as in (1), wherein the image information is a two-dimensional code.
(3) A charge system for charging for the use of a two-dimensional code in electronic commerce involving sending and receiving information regarding advertising, presentation or sale of merchandise over a public communication line, the system charging a certain fee to a party originating commercial information (party creating a two-dimensional code), based on the number of times that a user of the code has scanned with a scanning device the two-dimensional code attached to a medium, such as a piece of paper or merchandise, which has been furnished by the party originating the commercial information (party creating a two-dimensional code), wherein:
   the party creating a two-dimensional code originates commercial information, attaches a certain two-dimensional code into which necessary information and a serial number has been entered onto a medium and furnishes the medium to a user;
   to verify the party that has created the two-dimensional code, the user confirms the identity of the party that has created the two-dimensional code when accessing the commercial information by specifying the party that has created the two-dimensional code based on the scanned serial number of the two-dimensional code on the medium; and
   based on the serial number and its number of hits, the party that has created the two-dimensional code is charged for the use of the two-dimensional code.
(4) Image information for use in the charge system as in (1), wherein necessary data and authentication data for managing the party originating the commercial information are entered into a data region of the image information.
(5) A two-dimensional code for use in the charge system as in (2) or (3), wherein necessary data and authentication data for managing the party that has created the two-dimensional code or a serial number are entered into a data region of the two-dimensional code.
(6) A two-dimensional code for use in the charge system as in (2) or (3), wherein one or more file addresses are converted into a serial number and entered into the two-dimensional code.
(7) The charge system as in (3), using a two-dimensional code in which one or more file addresses on the world wide web that the originating party has established on the internet are converted into a serial number in the data region of the two-dimensional code.
(8) A method for displaying world wide web pages corresponding to two-dimensional code as in (6) above, which is scanned in by a user of that code, in which:
   a two-dimensional code in which a plurality of URLs indicating the location of web pages on the world wide web are converted and consolidated into one or more serial numbers and entered into a data region of the two-dimensional code, and a world wide web browser having a function for simultaneously displaying a plurality of web pages corresponding to the plurality of URLs on one screen of a display are combined so that a plurality of web pages corresponding to the plurality of URLs are simultaneously displayed on one screen, based on code data that the user has scanned from the two-dimensional code.

### BRIEF DESCRIPTION OF THE DRAWINGS

Fig. 1 is a diagram illustrating a charge system for use of two-dimensional code.
Fig. 2 is a diagram illustrating a charge system for use of two-dimensional code.
Fig. 3 is a diagram illustrating a system for entering a serial number into a two-dimensional code.
Fig. 4 is a diagram illustrating the process of scanning two-dimensional code with a scanning device and outputting it.
Fig. 5 is a diagram illustrating the steps in a charge system of the present invention.
Fig. 6 illustrates how data are entered into the data region of the two-dimensional code.
Fig. 7 illustrates an example of consumer-restricting code.
Fig. 8 is a flowchart illustrating the production of the two-dimensional code and the disclosure of the address page.
Fig. 9 illustrates a system for simultaneously displaying a plurality of pages, using a two-dimensional code, in which a plurality of URLs has been consolidated into one serial number.
Fig. 10 illustrates a system (on the client side) in accordance with the present invention using image information, in which a plurality of file addresses has been consolidated into one serial number.
Fig. 11 illustrates a system (on the managing party side) in accordance with the present invention using image information, in which a plurality of file addresses has been consolidated into one serial number.
Fig. 12 illustrates a system (on the user side) in accordance with the present invention using image information, in which a plurality of file addresses has been consolidated into one serial number.
Fig. 13 illustrates a system (on the client side) for gathering information by analysis of the serial number in a two-dimensional code.
Fig. 14 illustrates a system (on the managing party side) for gathering information by analysis of the serial number in a two-dimensional code.
Fig. 15 illustrates a system (on the user side) for gathering information by analysis of the serial number in a two-dimensional code.
Fig. 16 shows how a serial number is made for the two-dimensional code.

### DESCRIPTION OF THE PREFERRED EMBODIMENTS

The following is a more detailed explanation of the present invention, taking the case of a two-dimensional code as an example. In transactions regarding merchandise, services or information by electronic commerce using a public communication line, usually a party offering the information, merchandise etc. and a party using the same are parties to the transaction. In the present invention, however, a feature is that information is sent and received through a certain two-dimensional code, so that a party furnishing the two-dimensional code (managing party), which manages the two-dimensional code and its users, is present as a third party between the other parties.

This party furnishing the two-dimensional code (managing party) creates a website that it operates on the web and stores it on a web-server that is a computer for managing the charge system of the present invention, and runs the website. The website operated on the web displays, for example, a user registration screen, a user validation screen (including validation for hit charging, for example), and an encoder screen for the creation of two-dimensional code, but there is no limitation to these.

In electronic commerce, the party originating commercial information (the party creating the two-dimensional code) inserts the necessary information into a blank two-dimensional code from a web site furnished by the party furnishing the two-dimensional code to create a certain two-dimensional code.

Here, the party creating the two-dimensional code opens a world wide web-browser for browsing the internet, enters for example an ID at the website, performs user verification/registration, receives a validation ID, and creates the two-dimensional code.

For the two-dimensional code, necessary information, such as a URL, a mail address or a file address on a floppy disk, CD-ROM or DVD, is entered in addition to authentication data that are unique to the party creating the two-dimensional code. With these authentication data, the party furnishing the two-dimensional code keeps track of the user (creating party) and verifies the identity of the user. Particularly as a means for identity verification in electronic commerce, this is information that is of equal importance as a password, or a code number. For these authentication data, it is possible to use, for example, data such as a serial number or a digital signature, either alone or in combination, but it should be noted that there is no limitation regarding the types of data. The party creating the two-dimensional code can use the two-dimensional code without charge, and can attach the two-dimensional code freely to a medium, such as a piece of paper or merchandise, by an appropriate means, such as by printing, sticking on a seal, etc.

In electronic commerce, in which information is sent and received over a public communication line, to verify the identity of a party originating commercial information using the two-dimensional code and to charge for this use, the party originating the information sends the necessary information over a public communication line, produces a certain two-dimensional code into which the necessary information and the authentication data have been input, and attaches the two-dimensional code by an appropriate means to a medium such as a piece of paper or merchandise and furnishes it to the consumer.

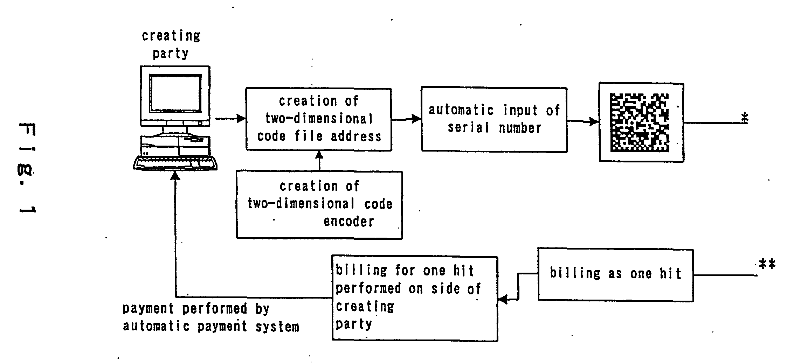

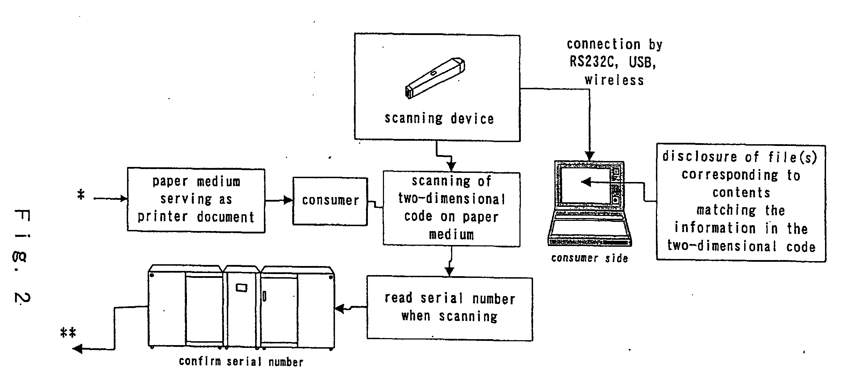

That is to say, the party originating the information sends electronic information, such as a web page, via an input/output device, such as a computer, produces a two-dimensional code that represents authentication data, such as a file address of the electronic information and a serial number specifying the originating party, supplies it to the consumer after printing or sticking it to a medium such as a piece of paper or merchandise (see Figs. 1 and 2).

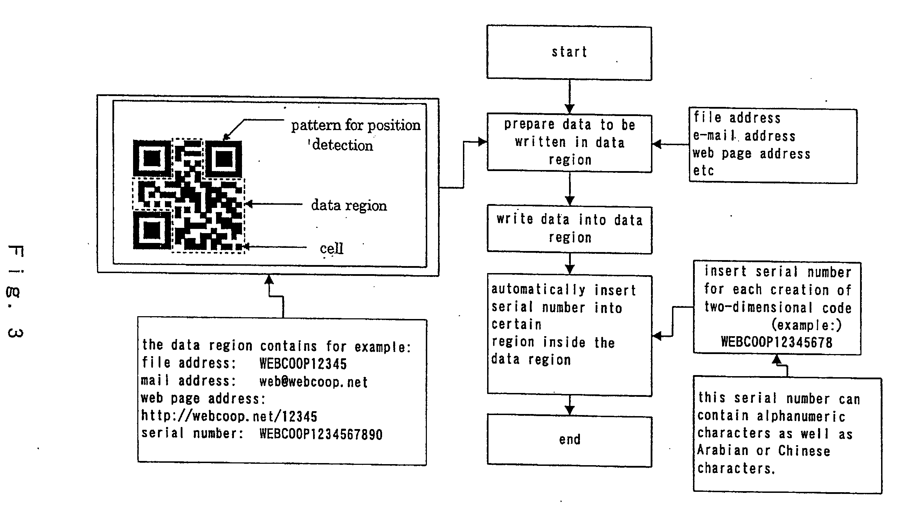

The party creating the two-dimensional code (party originating the information) accesses the resources for creating two-dimensional codes, for example a web page that the party furnishing the two-dimensional code, which manages two-dimensional codes, maintains on the internet, and inputs a file address or necessary information of the party originating the information (the user) and a serial number etc. into a blank two-dimensional code furnished on the world wide web. It is possible to have the serial number inserted automatically by letting users register and then specifying the party creating the two-dimensional code (the user) based on authentication data such as a password or a mail address specified by the user. Fig. 3 shows an example of the creation of a two-dimensional code. When the two-dimensional code has been created as image information, it is registered, and after the party furnishing the two-dimensional code (managing party) has verified this image information, the completed image information (two-dimensional code) is sent by a transfer means to the party creating the two-dimensional code (the user) over a communication line, such as electronic mail.

The creating party attaches the completed image information to a certain medium such as a piece of paper or merchandise by printing or as a seal, and supplies it in form of the medium of paper or merchandise to the consumer.

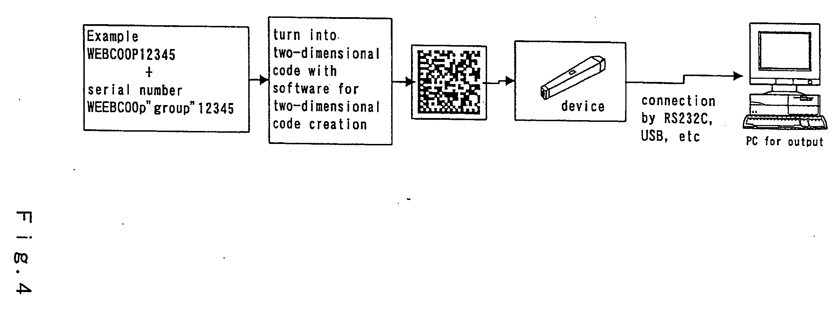

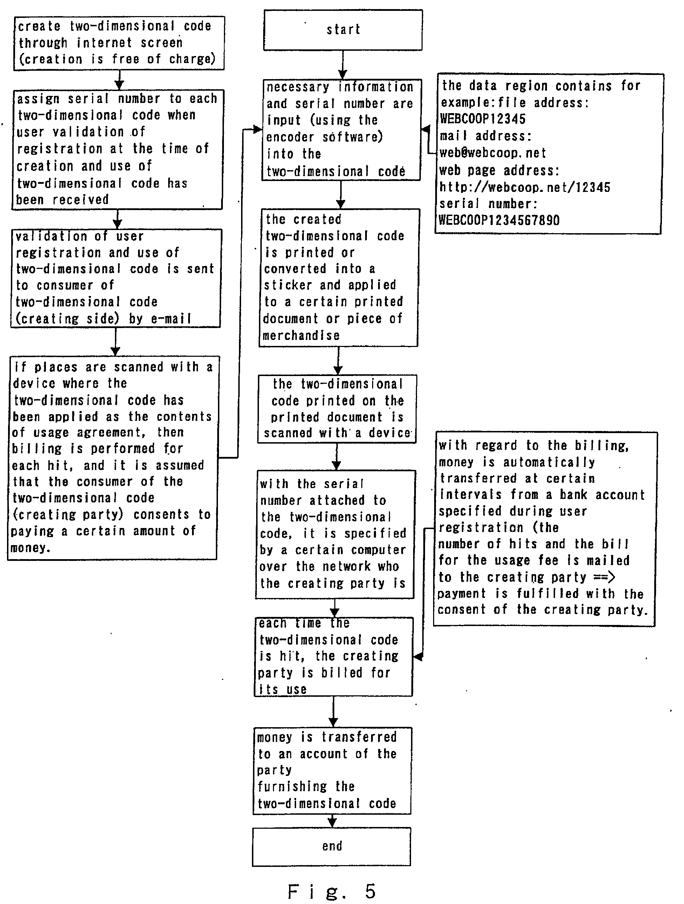

For the use thereof, the party using the two-dimensional code can convert the code information into electronic information by scanning the two-dimensional code attached to the piece of paper or merchandise with a certain code-reader (device), and can access a certain document or web page on the world wide web with an input output device, such as a computer (see Fig. 4). The code-reader (device) can be any suitable device for optically reading information. It includes for example an OCR system or a code-reader, irradiates light to the two-dimensional code attached to the medium, detects the reflected light and converts it into an electric signal, which it sends to a computer. The computer receives the result that has been read in, starts a world wide web-browser for accessing the server hosting the web page that corresponds to the URL contained therein, accesses a certain web page, and receives this web page, and a serial number signal is sent to the web-server of the computer managing the two-dimensional codes, which receives this information. That is to say, the received web page is displayed with a world wide web-browser on a display, and the detected serial number information is sent to a certain computer managing two-dimensional codes, and based on data stored in that computer, the serial number is looked up, the identity of the party originating this information can be verified by specifying the party originating this information (creating party), and charging information, regarding the charging of a fee for the use of the two-dimensional code, is sent to the originating party, based on the number of times that the consumer has scanned the two-dimensional code. Thus, the creating party is charged for the use of the two-dimensional code based on the number that the two-dimensional code is hit, but the relation between the number of hits and the charging can be set as appropriate and is not limited. For the actual payment, a regular electronic payment system can be used as appropriate, and there is no particular limitation to its format (see Fig. 5).

In the present invention, regular information processing devices and system means can be used for the input/output devices and terminal devices for the electronic commerce in which information regarding advertising, presentations or sales of merchandise is sent and received using a public communication line, for the device reading the image information used by the consumer (scanning device), and for the electronic information processing device (computer) and system managing the image information, and there is no particular limitation to these.

In the present invention, any appropriate information means, such as a barcode, a two-dimensional code, or any other graphics pattern, can be used for the image information, but it is preferable to use a two-dimensional code, which has a sufficient data region for entering authentication data.

In the present invention, newspapers, magazines, advertisements, folded supplement fliers or other printed documents or suitable advertisement media, information media such as floppy disks, CD-ROMs or optical disks, and all kinds of merchandise can be given as examples of the media to which the image information, such as a two-dimensional code, can be attached. There is, however, no limitation thereto, as long as the media can furnish information regarding advertising, presentation or sale of merchandise.

Suitable methods for applying the image information, such as the two-dimensional code, to these media include for example printing on the medium, sticking a sticker on it, or fluorescent printing, but there is no particular limitation.

The system for charging the use of the image information in accordance with the present invention is based on charging the party originating the information depending on, for example, the user ID registered with a party that registers users, a serial number included in the two-dimensional code, and the number of hits of this number. Needless to say, it is also possible to simultaneously employ as suitable other multiple communications through a user interface in combination with these.

Advantages of the present invention are that, in electronic commerce, it is possible to directly access a web page address or a mail address sent by an originating party, using image information attached to a medium such as a piece of paper or merchandise furnished by the originating party, and that the party creating the two-dimensional code can create a certain two-dimensional code free of charge, without being charged at the time of creating the two-dimensional code, and furnish the two-dimensional code to the consumer. For the consumer, there is the advantage that it is easy to obtain the desired information with a simple operation. For the party originating the information, there is the advantage that the two-dimensional code can be attached to a medium, such as a piece of paper or merchandise, without being charged, and furnished to the consumer. For the party furnishing the two-dimensional code (managing party), there is the advantage that an expanding use of two-dimensional codes can be expected, and that the managing of two-dimensional codes and the charging for the use of two-dimensional codes is simple and laborsaving.

The following is an explanation of an embodiment for the use of two-dimensional codes in accordance with the present invention.

When using two-dimensional codes in accordance with the present invention, it is possible to enter data directly into the data region of the two-dimensional code, but it is preferable to convert, for example, a plurality of file addresses on the world wide web into one or more serial numbers, compress it and enter it. That is to say, when the necessary data is entered into the data region of the two-dimensional code, it is possible to enter the data directly or after encrypting the data. To be specific, examples of suitable methods include (i) directly entering URLs or mail addresses into the data region, (ii) converting (encrypting) a portion of these data and the necessary data into a serial number, and compressing and entering it, and (iii) converting all data into a serial number and compressing and entering it.

In these methods, advantages that are attained by converting (encrypting) the data into a serial number, and compressing and entering it include 1) the data volume can be compressed, 2) the area of the two-dimensional code can be minimized and the two-dimensional code can be standardized, 3) the data can be entered in encrypted form, 4) the security of the data can be ensured, 5) the contents of the encrypted data can be changed by a managing server, 6) it is possible to compress to preferably 90% to 50%, with a maximum of 64 bit, and to a square of at least 3mm side length, 7) for example, within the 64 bits, it is possible to insert an industry code and the serial number of the two-dimensional code, 8) size of the two-dimensional code can be changed freely to adapt it to the printing surface, and 9) if necessary, the two-dimensional code can be magnified for use,

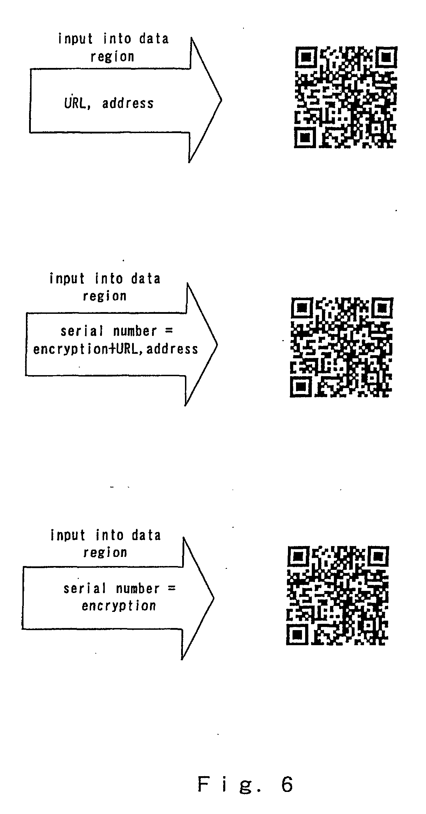

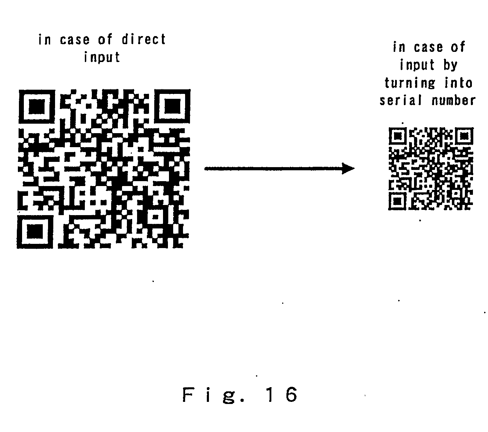

Fig. 6 shows how, with the above methods, the data is entered into the data region for the two-dimensional code. Fig. 16 shows an example of how a serial number is made for the two-dimensional code.

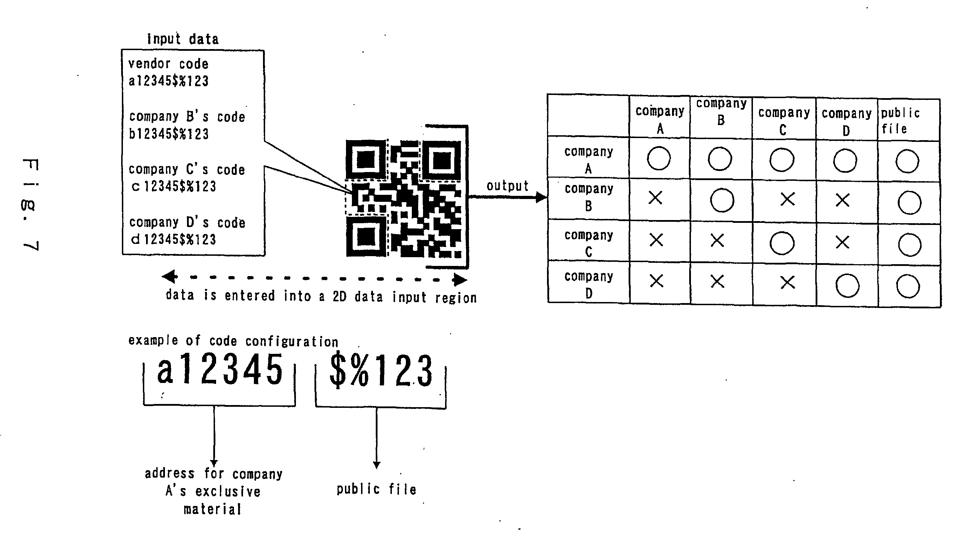

Fig. 7 shows an example in which the data is entered after conversion (encrypting) into a serial number. In Fig. 7, the encoding is such, that the input data "a12345" is limited to resources for company A, "b12345" is limited to resources for companies A and B, "c12345" is limited to resources for companies A and C, and "d12345" is limited to resources for companies A and D, and when this code is scanned by the consumer, then company A can read the resources for companies B, C and D, company B can read the resources for companies B, company C can read the resources for companies C, and company D can read the resources for companies D, so that the consumers of the two-dimensional code can be restricted.

In accordance with the present invention, it is possible to create a plurality of URLs and mail addresses, and convert into the two-dimensional code a serial number integrating the URLs and mail addresses into only one serial number.

The party creating the code opens an encoder for creating a two-dimensional code, enters the URLs into a blank two-dimensional code that has been sent from the server on the side of the managing party, and sends the two-dimensional code to the server on the side of the managing party. The managing party sends to the creating party a compressed two-dimensional code that integrates a plurality of URLs into one serial number and address. The creating party prints out this two-dimensional code, sticks it onto a printed document and furnishes it to the consumer.

Examples of suitable methods for producing two-dimensional code include (i) methods in which a module for producing two-dimensional code and a sending module are arranged on the side of the managing party, the managing party converts file addresses into serial numbers, produces a two-dimensional code that has been entered, and sends the same to the client, (ii) methods in which a module for producing two-dimensional code is arranged on the client side, a two-dimensional code into which a file address is entered is produced on the client side and sent to the side of the managing party, the managing party converts it into a serial number, and sends it to the client, and (iii) methods in which, in this case, the module for producing two-dimensional code is arranged on the side of the managing party, and a produced download file is downloaded and used on the client side. There is, however, no particular limitation to the configuration of these methods.

Next, the consumer reads the two-dimensional code with a code reader, and simultaneously displays a plurality of web pages corresponding to a plurality of URLs on one screen of a display. By integrating a plurality of URL addresses to be entered in the data region of a two-dimensional code into one address and serial number, a plurality of web pages can be simultaneously displayed on one screen of a world wide web-browser by scanning in one two-dimensional code, realizing multi-screen use of the browser. In this case, it is indispensable to use two-dimensional code and a browser with a multi-display function, but other than that, a regular browser is suitable, and there is no particular limitation. Thus, advantages that are attained include for example 1) that with one two-dimensional code, a plurality of web pages can be simultaneously displayed on one screen of a world wide web-browser, and 2) that access to the desired web pages becomes even easier.

In the above methods, a world wide web-browser is used, that has a function for multi-display of a plurality of web pages corresponding to a plurality of URLs on one screen, but it is possible to use any suitable browser that has this function.

In these methods, the hit signal from the code reader is sent to the managing server and the client side, and the client is charged a fee for the use of the two-dimensional code.

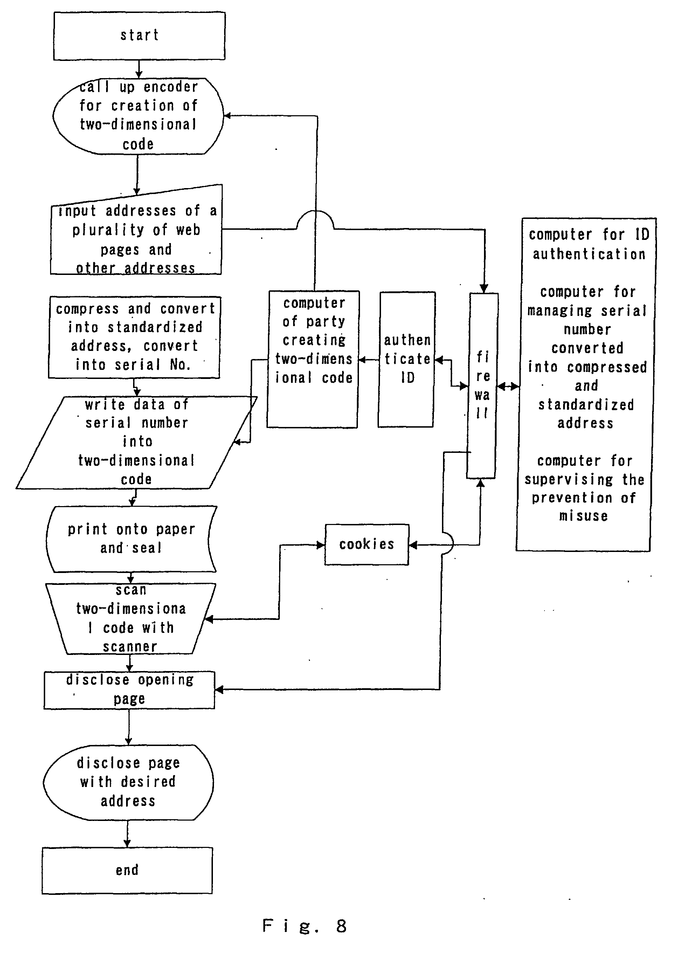

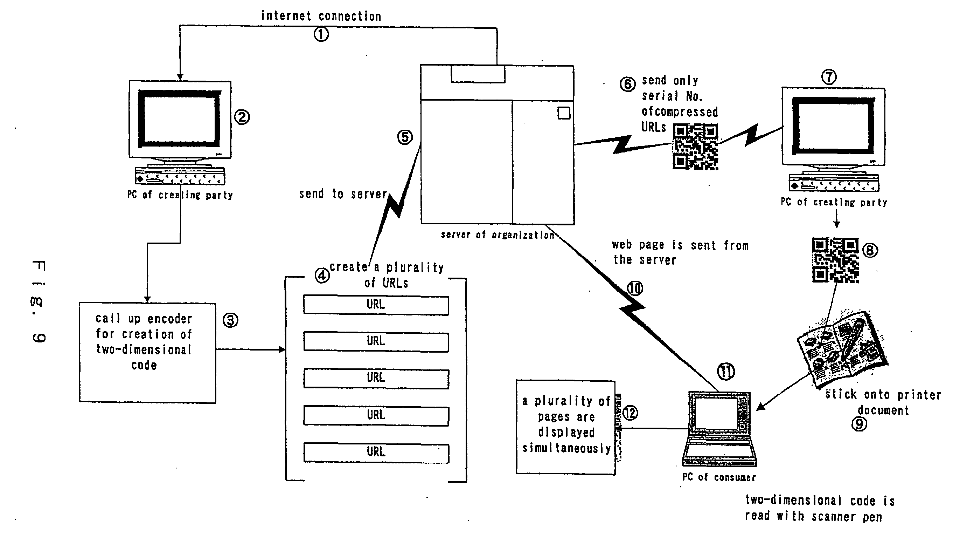

Fig. 8 is a flowchart illustrating the production of the two-dimensional code and the disclosure of the address page. Fig. 9 illustrates a method for displaying web pages, in which a plurality of web pages encoded in the two-dimensional code is displayed simultaneously.

The following is an explanation of an example of the configuration of a file address managing system on the server on the managing side, and a method for converting file addresses into a serial number and disclosing world wide web-web pages corresponding to the file addresses.

On the client side, file addresses are entered and sent to the managing party. On the side of the managing party, the received file addresses are consolidated, converted into a serial number, this serial number is entered into a data region of image information, which is sent to the client side, the file addresses that have been consolidated into the serial number are sent to a web server through the server on the managing side and converted into IP addresses, and when the user has hit the two-dimensional code, the world wide web pages corresponding to these file addresses are sent and shown.

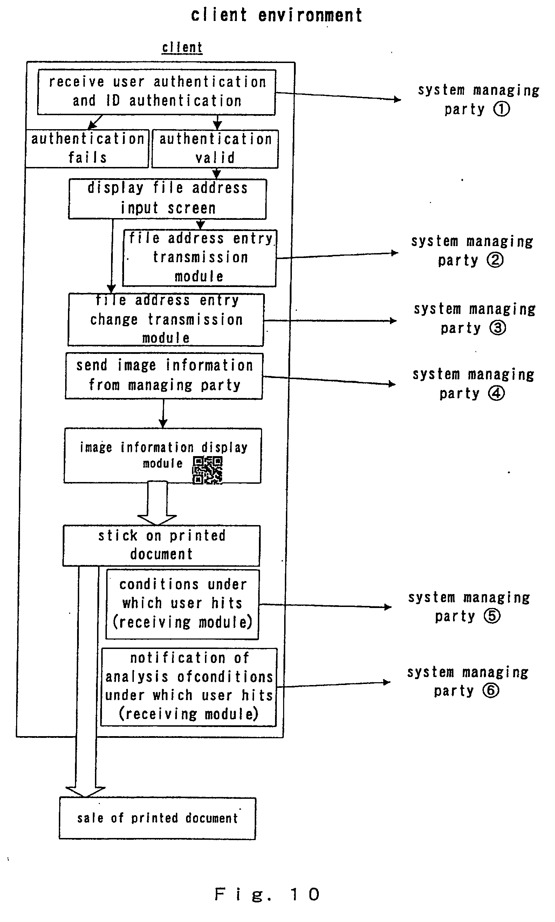

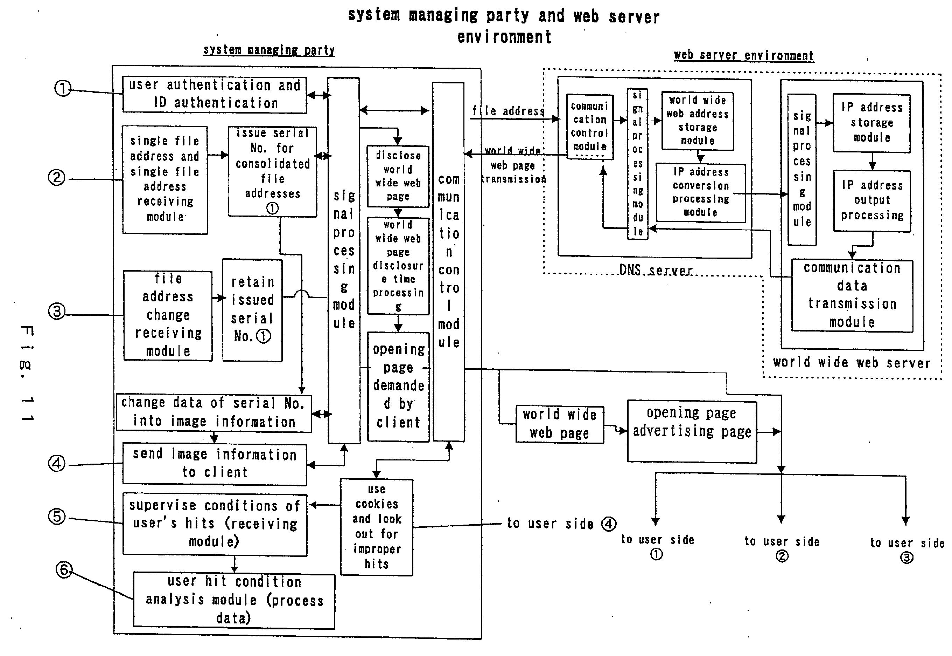

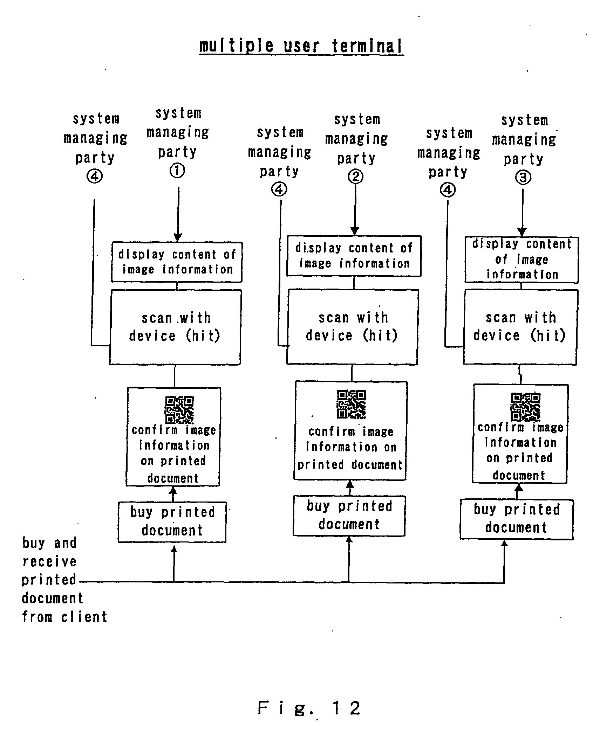

Figs. 10 to 12 show an example of the configuration of this system.
The following is an example of a method for gathering information by analysis of serial numbers in two-dimensional codes.

In accordance with the present invention, it is possible to analyze a serial number in a two-dimensional code that the user has hit with a scanner, and to furnish these analysis data to the party that has created the two-dimensional code (the client side).

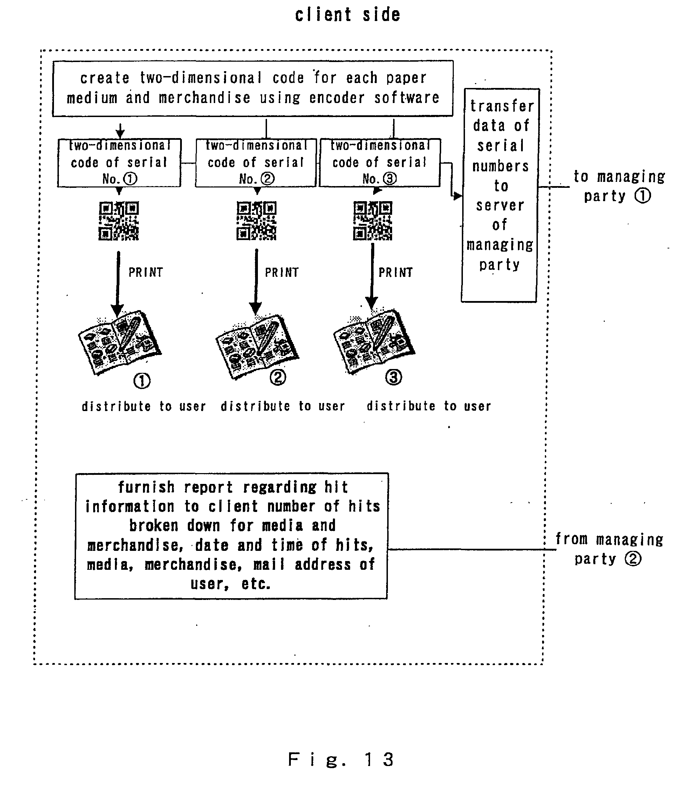

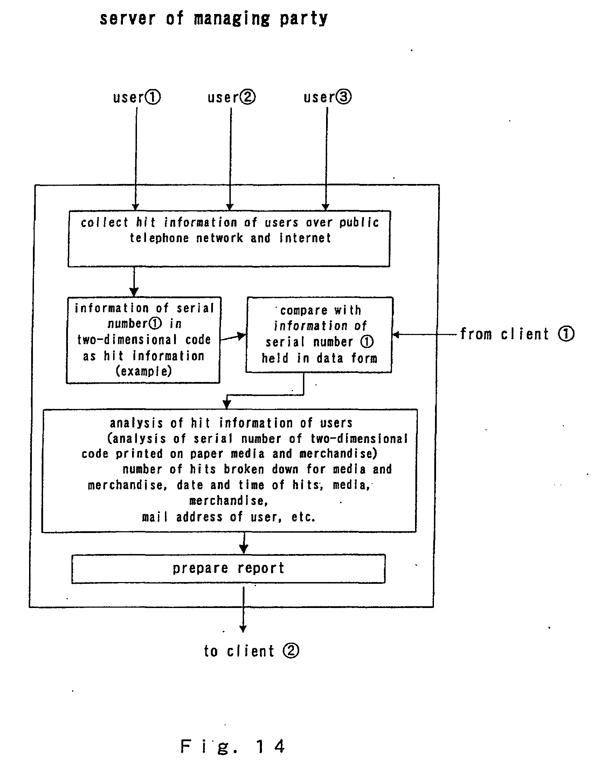

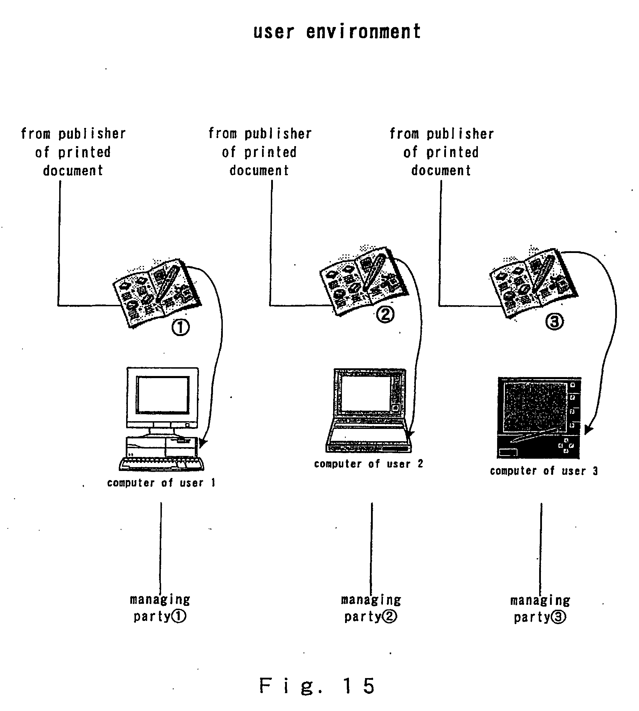

The client side uses an encoder software, produces a two-dimensional code containing different serial numbers for different media, such as pieces of paper or merchandise, sends and registers the serial number information to a server on the side of the managing party, prints the two-dimensional codes on the media, and distributes them to the users. When the two-dimensional code is hit by the user, the hit information of the users is sent to the server on the side of the managing party, the managing party compares this hit information with the serial number information that has been stored beforehand, analyzes it, and, if necessary, sends the analysis data to the party that has created the two-dimensional code (the client side). An example of the configuration of such a system is shown in Figs. 13 to 15.

Thus, advantages attained by inputting serial numbers into the two-dimensional code include 1) that the two-dimensional codes can be classified (i.e., the two-dimensional code can be managed separately), 2) that the client side can grasp the conditions under which the two-dimensional code is used with high precision as hit information, 3) user preferences, such as the interest in the merchandise (number of hits), effect of the advertisements for each medium separately (date and time of hit, etc.), and 4) merchandise and advertisements can be furnished to the user responding to the user's needs.

The present invention relates to a system for charging a party originating commercial information a certain fee, based on the number of times that an information consumer has scanned with a scanning device image information, which is attached to a medium such as a piece of paper, merchandise furnished by the party originating the commercial information, in electronic commerce involving sending and receiving information regarding advertising, presentation or sale of merchandise over a public communication line.
Advantages that can be attained with the present invention include that 1) in electronic commerce, the identity of the party creating the two-dimensional code (originating party) can be confirmed easily and reliably, based on confirmation data that have been entered into the two-dimensional code; 2) the consumer can directly enter a web page address or a mail address originated by the originating party simply by converting the two-dimensional code attached to a medium, such as a piece of paper or merchandise, into an electric signal by scanning it with a scanning device, so that the desired information can be obtained with a simple operation; 3) the party originating the information can be charged a fee for the use of the two-dimensional code, which is based on the number of times that a consumer has scanned the two-dimensional code; 4) the party creating the two-dimensional code can produce the two-dimensional code free of charge and attach it to a medium to furnish it to a consumer; 5) the party furnishing the two-dimensional code (managing party) can collect the fee for use of the two-dimensional code reliably.

## Claims

1. A charge system for charging for the use of image information in electronic commerce involving sending and receiving information regarding advertising, presentation or sale of merchandise over a public communication line, the system charging a certain fee to a party originating commercial information, based on the number of times that a user of the information has scanned with a scanning device image information attached to a medium, such as a piece of paper or merchandise, which has been furnished by the party originating the commercial information, wherein:
the originating party originates commercial information, attaches certain image information into which necessary information and authentication data has been entered onto a medium and furnishes the medium to a consumer;
to verify the originating party, the consumer confirms the identity of the party originating the commercial information when accessing the commercial information by specifying the originating party based on the scanned authentication data of the image information on the medium; and
based on the authentication data and the number of hits thereof, the party originating the commercial information is charged for the use of the image information.

2. The charge system for charging for the use of image information in electronic commerce as claimed in Claim 1, wherein the image information is a two-dimensional code.

3. A charge system for charging for the use of a two-dimensional code in electronic commerce involving sending and receiving information regarding advertising, presentation or sale of merchandise over a public communication line, the system charging a certain fee to a party originating commercial information (party creating a two-dimensional code), based on the number of times that a user of the code has scanned with a scanning device the two-dimensional code attached to a medium, such as a piece of paper or merchandise, which has been furnished by the party originating the commercial information, wherein:
the party creating a two-dimensional code originates commercial information, attaches a certain two-dimensional code into which necessary information and a serial number has been entered onto a medium and furnishes the medium to a user;
to verify the party that has created the two-dimensional code, the user confirms the identity of the party that has created the two-dimensional code when accessing the commercial information by specifying the party that has created the two-dimensional code based on the scanned serial number of the two-dimensional code on the medium; and
based on the serial number and the number of hits thereof, the party that has created the two-dimensional code is charged for the use of the two-dimensional code.

4. Image information for use in the charge system as claimed in Claim 1, wherein necessary data and authentication data for managing the party originating the commercial information are entered into a data region of the image information.

5. A two-dimensional code for use in the charge system as claimed in Claims 2 or 3, wherein necessary data and authentication data for managing the party that has created the two-dimensional code or a serial number are entered into a data region of the two-dimensional code.

6. A two-dimensional code for use in the charge system as claimed in Claims 2 or 3, wherein one or more file addresses are converted into a serial number and entered into a data region of the two-dimensional code.

7. The charge system as claimed in Claim 3, using a two-dimensional code in which one or more file addresses on the world wide web that the originating party has established on the internet are converted into a serial number and entered in the data region of the two-dimensional code.

8. A method for displaying world wide web pages corresponding to two-dimensional code as claimed in Claim 6, which is scanned in by a user of that code, wherein:
a two-dimensional code in which a plurality of URLs indicating the location of web pages on the world wide web are converted and consolidated into one or more serial numbers and entered into a data region of the two-dimensional code, and a world wide web-browser having a function for simultaneously displaying a plurality of web pages corresponding to the plurality of URLs on one screen of a display are combined so that a plurality of web pages corresponding to the plurality of URLs are simultaneously displayed on one screen, based on code data that the user has scanned the two-dimensional code.
